# EUROPEAN PATENT APPLICATION

(11) **EP 4 697 544 A1**
(43) Date of publication of application: **18.02.2026**
(21) Application number: 24194158.2
(22) Date of filing: 12.08.2024
(51) Int. Cl.: H02J 3/46

(54) **SYSTEM, METHOD AND NON-TRANSITORY COMPUTER-READABLE MEDIUM FOR TESTING ASSISTIVE SYSTEMS FOR POWER GRID CONTROL CENTERS**

(71) Applicant: Siemens Aktiengesellschaft, 80333 München (DE)
(72) Inventor: Schlegel, Steffen, 99096 Erfurt (DE); Westermann, Dirk, 99425 Weimar (DE); Krebs, Rainer, 91052 Erlangen (DE)
(74) Representative: Siemens Patent Attorneys

(57) **Abstract**

The present disclosure provides a method for virtual integration testing of power grid control assistants, characterized in that the method comprises:
generating, by a simulation module, virtual scenarios for testing power grid control assistants;
automatically analyzing, by an analysis module, interactions between new or updated power grid control assistants and existing power grid control assistants; and
assessing, by an evaluation module, performance of each power grid control assistant.

The disclosure also relates to a system and a non-transitory computer-readable medium for implementing the method.

## Description

The present invention relates to a method for virtual integration testing of power grid control assistants according to claim 1, a system for virtual integration testing of power grid control assistants according to claim 6, and a non-transitory computer-readable medium according to claim 11.

### BACKGROUND

Electrical energy grids must be managed using a grid control system, typically located in a control center. Due to the increasing use of renewable energies such as wind turbines or photovoltaic systems, electrical energy grids must constantly become more flexible, easier to maintain and/or expandable. Furthermore, operation should be optimized, for example by working closer to permissible limit conditions for equipment during operation. The grid should be controlled in such a way that transmission losses and bottlenecks or emergency measures are minimized.

In addition, the so-called sector coupling requires more and more interfaces between the energy networks for heat and gas, which have often been managed separately up to now.

The first generation of grid control system software for the control center was developed in the 1970s. It uses server computers specially configured for this application, which were installed on-site in the computer room of the network operator's control center. The server computers were typically redundantly designed to ensure availability of the grid control system functionality for more than 99.999% of the time. In some cases, even today, the redundant server computers are installed at different locations to make the overall system even more resistant and, for example, to ensure control center functionality through the server computers at the other location even in the event of disasters such as earthquakes or fire at one location.

From the product brochure "Intelligent control center technology - Spectrum Power", Siemens AG 2017, Article-No. EMDG-B90019-00-7600, software for a so-called "Supervisory Control and Data Acquisition (SCADA)" system for use in a control center is known. SCADA systems have long been known for controlling and monitoring energy networks (Wikipedia permanent link: https://en.wikipedia.org/w/index.php?title=SCADA&oldid=858433181). Measurement values from sensors, for example from voltage measuring devices and current measuring devices in the energy network, are aggregated and transmitted to the control center. Control commands are sent to the energy network to control circuit breakers, tap changers of transformers, disconnectors and other controllable equipment in the energy network, as well as to control energy generators such as power plants. These control commands are received and processed by "Remote Terminal Units" (RTUs), "programmable logic controllers" (PLCs) and "intelligent electronic devices" (lEDs) to control the circuit breakers, disconnectors, etc. In the control center, a local data center is often provided on which the control center software, such as Spectrum Power, runs. The control center software is usually operated in a central computer arrangement, which can be designed as a data center with processors, data storage devices and screens. The term "central" refers to the fact that all measurement data from the energy network and all control commands for the energy network are processed centrally. Technicians are kept on standby around the clock in the control center to monitor the SCADA displays of the current operating status of the energy network and to take countermeasures such as shutting down a network section in the event of a fault.

A partial or complete design of the computer arrangement or the control center software as a cloud application, i.e. a server arrangement with decentrally distributed resources for data processing and data storage, which are connected via a data network such as the Internet, can also be carried out.

As a side effect of the ever-increasing spread of distributed energy generation, for example through photovoltaic systems or wind turbines, the determination of a system state of the energy network is made more difficult by the ever-increasing number of local energy generators feeding into the low and medium voltage network. In particular, recording the current state in the lower voltage levels (medium and low voltage) is becoming increasingly important because the networks in the lower voltage levels are more heavily loaded by the decentralized feed-ins.

All these factors make it more difficult not only to determine the current network status but also to predict the future network status.

The dependence on weather influences is increasing because, for example, solar cells are strongly influenced by cloud cover and wind turbines by wind strength. These problems also have an impact on the next higher voltage level - a high-voltage energy transmission network - which is therefore more difficult to control and predict.

Up to now, load and generation forecasts and/or schedules have usually been used in conjunction with a so-called "Distribution System Power Flow (DSPF)" to estimate a future network state. DSPF uses static equipment data, local forecasts for energy consumption and energy generation as well as dynamic topology information (i.e. which lines are currently switched between the individual components) to calculate a predicted voltage magnitude and voltage angle at each network section. On the one hand, a state estimation can be carried out for the current state and, on the other hand, a forecast or network calculation for future states (e.g. load flows). The current state estimation also uses erroneous measured values as input, although the estimation in the high-voltage network is overdetermined. A load flow calculation works with schedules/forecasts and has no overdetermined input data. For "forecast" (e.g. wind forecasts) for the current state, the term "now-cast" is sometimes used.

One approach is known, for example, from the product brochure "Spectrum Power Active Network Management", Siemens AG 2016, EMFG-B10104-00. The technical basics are known from the publications "Real-Time Distribution System State Estimation" by Dzafic et al., 2010 IEEE 978-I-4244-7398-4 and "Real-Time Estimation of Loads in Radial and Unsymmetrical Three-Phase Distribution Networks" by Dzafic et al., 2013 IEE 0885-8950.

Furthermore, so-called "Digital Substations", i.e. substations with their own computing capacity for data acquisition and evaluation, are used to monitor and control energy distribution networks, especially at the low-voltage level. The integration of such a substation into a SCADA system is known, for example, from the publication "Digital substations with the Future built in", Siemens AG 2017, Article-No. EMDG-B10130-00-7600, from page 5.

The operating personnel in a control center for an electrical energy network require software for evaluating measurement data so that, for example, a network state can be determined by means of a network analysis. For the typically meshed transmission network of the high-voltage or medium-voltage level, measurement data such as voltage, current, active power, reactive power and, if necessary, phase angle can usually be recorded for a large number of measuring points. Often the measurement data is even redundant, so that a high accuracy and reliability of the measurement data is achieved.

In the distribution network, on the other hand, which is typically assigned to the low-voltage level and partly also to the medium-voltage level, independent sub-networks with a radial structure are often provided, which are not comprehensively monitored with measuring devices. However, additional data from e.g. intelligent electricity meters (i.e. devices that can be read remotely via the Internet) can be taken into account.

Furthermore, software for data acquisition in a distribution network and for controlling this distribution network is known from the product brochure "Spectrum Power 7 v2.30 SP2 Distribution Network Applications " (hereinafter referred to as DNA), Siemens AG 2021, AS-DNA-EN, Edition 07.2021. The superordinate transmission network with higher nominal voltage is not taken into account, i.e. no interactions with this network are considered.

Additionally, software for data acquisition in a transmission network and for controlling this transmission network is known from the product brochure "Spectrum Power 7 v2.30 SP2 Transmission Network Applications " (hereinafter referred to as TNA), Siemens AG 2021, AS-TNA-EN, Edition 07.2021. The subordinate distribution network with lower nominal voltage is not taken into account, i.e. no interactions with this network are considered.

Essentially, this gives operators of grid control centers various options for recording networks at the distribution level and the transport or transmission level for state estimation.

Power grid control centers play a crucial role in managing and optimizing electrical distribution networks. These centers rely on various software systems and applications to monitor, analyze, and control the complex operations of power grids. As the complexity of power grids increases, particularly with the integration of renewable energy sources and smart grid technologies, there is a growing need for advanced assistive systems to support operators in making informed decisions and maintaining grid stability.

Assistive systems for power grid control centers, often referred to as power grid control assistants, are designed to enhance the efficiency and reliability of grid operations. These systems utilize sophisticated algorithms, data analysis techniques, and sometimes artificial intelligence to provide real-time insights, predictive analytics, and decision support to grid operators. However, the integration of new or updated assistive systems into existing control center environments can be challenging and potentially disruptive if not properly tested and validated.

Such assistants can be applied to any of the aforementioned software products, on any voltage level in the grid hierarchy. They can, for example, assist in state estimation, data preparation, simulations, visualization of measured electrical values (e.g. voltage, current at any given location in a grid) and/or calculated values (e.g. power flow), automatically deriving countermeasures to contingencies, preparing and sending control signals to controllable equipment such as switchgear and capacitor banks and controllable substation transformers.

The integration of third-party developed assistive systems, such as apps developed for a control center applications marketplace, introduces additional complexities and potential risks to the power grid control environment. These complications may include:
1. Compatibility issues: Third-party applications may not be fully compatible with existing control center systems, potentially leading to conflicts in data formats, communication protocols, or user interfaces.
2. Security concerns: External applications may introduce vulnerabilities to the control center's cybersecurity infrastructure, potentially compromising sensitive grid data or control systems.
3. Performance impact: Poorly optimized third-party apps could negatively affect the overall performance of the control center systems, potentially leading to delays in critical decision-making processes.
4. Data integrity and consistency: Third-party applications may process or interpret data differently from existing systems, potentially leading to inconsistencies in grid state assessments or control recommendations.
5. Regulatory compliance: External apps may not fully adhere to industry standards or regulatory requirements, potentially exposing grid operators to compliance risks.
6. Interoperability challenges: Integrating multiple third-party applications from different vendors may result in interoperability issues, complicating data exchange and coordination between various assistive systems.
7. Vendor lock-in: Reliance on specific third-party applications may create dependencies that make it difficult to switch to alternative solutions in the future.
8. Support and maintenance complexities: Managing and maintaining a diverse ecosystem of third-party applications can be challenging, potentially leading to increased downtime or reduced reliability of the overall control center system.
9. Training and adoption hurdles: Grid operators may require additional training to effectively use and interpret the outputs of various third-party assistive systems, potentially leading to temporary decreases in operational efficiency.
10. Liability and accountability issues: In case of system failures or incorrect decisions based on third-party app recommendations, determining liability and accountability may become more complex.

These additional complications underscore the importance of robust integration testing for third-party developed assistive systems before their deployment in live power grid control centers.

Traditional methods of testing and integrating new software systems in power grid control centers often involve time-consuming and resource-intensive processes. These methods may require extensive on-site testing, which can be difficult to coordinate without disrupting ongoing grid operations. Additionally, the complexity of modern power grids makes it challenging to anticipate all possible scenarios and interactions that may occur when introducing new assistive systems.

Based on known computer-implemented methods for testing new software components, the present invention addresses the challenge of providing a computer-implemented method that enables fast, reliable and safe testing of assistive systems for power grid control centers.

The invention solves this problem through a method according to claim 1.

There is a growing recognition in the industry of the need for more efficient and comprehensive testing methodologies for power grid control assistants. Virtual integration testing has emerged as a promising approach to address these challenges, allowing for thorough evaluation of new systems in a simulated environment before deployment in live control centers.

As used herein, the term "power grid control assistant" may refer to a software or hardware component designed to aid in the management, control, and optimization of electrical power distribution systems. These assistants may utilize rule-based algorithms, machine learning, or other advanced algorithms to analyze data, make decisions, and provide recommendations for efficient power grid operation. In some aspects, the power grid control assistant may be implemented as a software module installed on a server or in a cloud computing environment. A "server" may refer to a computer system that provides services to other computers, devices, or programs in a network. A "cloud computing environment" may refer to a network of remote servers hosted on the Internet to store, manage, and process data, rather than a local server or a personal computer.

The term "virtual integration testing" may refer to a process of evaluating the performance, compatibility, and interactions of power grid control assistants in a simulated environment, without the need for physical implementation in a real power grid system. This testing may be conducted using various software tools and platforms that can simulate complex power grid scenarios.

A "simulation module" may be a software or hardware component capable of generating and running virtual scenarios that mimic real-world power grid conditions and events for testing purposes. When implemented as software, the simulation module may be installed on a server or deployed in a cloud environment. In some cases, the simulation module may be implemented in hardware, such as a dedicated computer system with specialized processors designed for high-performance simulations.

An "analysis module" may refer to a component designed to examine and interpret data, interactions, and outcomes from virtual integration testing, particularly focusing on the interplay between different power grid control assistants. This module may be implemented as software running on a server or in a cloud environment, or as a hardware component with dedicated processing units for data analysis.

An "evaluation module" may be a component responsible for assessing the performance, efficiency, and effectiveness of power grid control assistants based on predefined criteria and metrics. Like the other modules, it may be implemented as software or hardware, with the ability to process large amounts of data and generate comprehensive reports.

The modules in the virtual integration testing system may employ various algorithms, which can be either rule-based or machine learning-based, depending on the specific requirements and complexity of the tasks. In some aspects, the simulation module may utilize rule-based algorithms to generate virtual scenarios based on predefined parameters and historical data. For example, it may use decision trees or expert systems to create realistic power grid conditions that reflect common operational patterns and known issues.

On the other hand, the analysis module may leverage machine learning algorithms to automatically detect patterns, anomalies, and potential conflicts in the interactions between power grid control assistants. This may include supervised learning techniques such as support vector machines (SVMs) or random forests for classification tasks, or unsupervised learning methods like clustering algorithms to identify groups of similar interactions or behaviors.

The evaluation module may combine both rule-based and machine learning approaches. It may use rule-based algorithms to apply predefined performance metrics and generate standardized conformity ratings that are based on the determined performance. Simultaneously, it may employ machine learning algorithms, such as reinforcement learning or neural networks, to adaptively assess and quantify efficiency improvements, cost reductions, and error prevention capabilities of the power grid control assistants over time.

"Virtual scenarios" may refer to computer-generated simulations of various power grid conditions, events, or situations used for testing and evaluating the performance of power grid control assistants. Examples for such scenarios are deviations of frequency and/or voltage of more than a certain threshold percentage form the nominal values of the grid, or contingencies such as blackouts or short circuits. These scenarios may be created and executed using specialized software tools or hardware systems designed for power grid simulation.

"Predefined parameters" may include pre-set variables, conditions, or constraints used to define and configure virtual scenarios for testing purposes. These parameters may be stored in databases or configuration files accessible by the simulation module.

"Historical data" may refer to previously recorded information about power grid operations, events, and performance, which can be used to inform and enhance the creation of realistic virtual scenarios. This data may be stored in large-scale databases or data warehouses, potentially utilizing big data technologies for efficient storage and retrieval.

A "standardized conformity rating" may refer to a systematic method of evaluating and categorizing the degree to which power grid control assistants performance meet specified standards or requirements. This rating system may be implemented as part of the evaluation module's functionality.

A "traffic light scheme" may refer to a visual representation system using the colors green, yellow, and red to indicate different levels of conformity or performance, typically with green representing the highest level and red the lowest. This scheme may be implemented in the user interface of the evaluation module or in generated reports.

In this context, conformity may refer to the degree to which a power grid control assistant meets specified operational standards, integration requirements, and performance criteria. Full conformity, indicated by a green rating, may signify that the assistant has successfully passed all integration tests without any detected issues. This may include seamless data exchange with existing software systems, absence of system freeze-ups or crashes, and optimal performance under various simulated scenarios.

The evaluation module may employ specific thresholds to determine the appropriate conformity rating. For instance, a green rating might be given when the performance of the assistive system indicates:
1. No data exchange issues are detected between the new assistant and existing software systems.
2. The assistant maintains stable operation without any freeze-ups or crashes during extended testing periods.
3. Response times consistently meet or exceed predefined performance benchmarks.
4. The assistant demonstrates accurate decision-making capabilities across a wide range of simulated scenarios.
5. Resource utilization (e.g., CPU, memory) remains within acceptable limits.

A yellow rating, indicating partial conformity, may be assigned when minor issues are detected that do not significantly impact overall functionality. This could include:
1. Occasional, non-critical data exchange delays or inconsistencies.
2. Rare instances of system sluggishness, but no complete freeze-ups.
3. Performance metrics that meet minimum requirements but fall short of optimal targets.
4. Accurate decision-making in most, but not all, simulated scenarios.
5. Resource utilization occasionally exceeding preferred limits, but remaining within acceptable ranges.

A red rating, signifying non-conformity, may be given when critical issues are identified that could potentially compromise the reliability or effectiveness of the power grid control system. Examples may include:
1. Frequent or severe data exchange problems with existing software.
2. Regular system freeze-ups or crashes.
3. Consistent failure to meet minimum performance benchmarks.
4. Inaccurate or unreliable decision-making in critical scenarios.
5. Excessive resource utilization that could impact overall system stability.

The evaluation module may use a combination of automated testing results and/or expert analysis to determine the appropriate conformity rating. In some cases, the module may also consider the severity and frequency of detected issues, as well as their potential impact on overall grid operations for a real-world electrical grid, when assigning ratings. This comprehensive approach aims to ensure that only thoroughly tested and highly reliable power grid control assistants receive full conformity ratings.

A "non-transitory computer-readable medium" may refer to any type of storage device or medium capable of storing computer-executable instructions, excluding transitory, propagating signals. This may include, but is not limited to, hard disk drives, solid-state drives, optical disks, flash memory devices, and other forms of persistent storage.

In some aspects, the system for virtual integration testing of power grid control assistants may in part or fully be implemented as a comprehensive hardware solution. Such a system may include one or more high-performance processors, such as multi-core CPUs or specialized GPUs, capable of running complex simulations and analyses. The system may also incorporate large-capacity data storage devices, including solid-state drives for fast data access and hard disk drives for long-term storage of historical data and simulation results. High-speed memory modules may be used to facilitate rapid data processing and real-time simulations. The hardware implementation may also include dedicated network interfaces for high-speed data transfer between different components of the system or for connecting to external data sources. In some cases, the system may utilize specialized hardware accelerators or FPGAs (Field-Programmable Gate Arrays) to optimize specific computational tasks related to power grid simulations or machine learning algorithms used in the control assistants.

The method comprises generating, by a simulation module, virtual scenarios for testing power grid control assistants. This embodiment offers several advantages, including the ability to create realistic and diverse testing environments without the need for physical implementation. It allows for comprehensive evaluation of power grid control assistants under various conditions, reducing the risk of unforeseen issues during real-world deployment. Alternative implementations may include using machine learning algorithms to generate scenarios based on historical data, or incorporating real-time data feeds to create dynamic, evolving scenarios.

The method comprises automatically analyzing, by an analysis module, interactions between new or updated power grid control assistants and existing power grid control software. This approach offers the advantage of quickly identifying potential conflicts or incompatibilities between different assistants, ensuring smooth integration and operation. It can save significant time and resources compared to manual analysis. Alternative implementations could involve using graph-based algorithms to map and analyze complex interactions, or employing natural language processing techniques to interpret and categorize interaction patterns.

The method comprises assessing, by an evaluation module, performance of each power grid control assistant. This embodiment provides the benefit of quantifiable performance metrics, allowing for objective comparison and evaluation of different assistants. It can help identify areas for improvement and optimize overall system performance. Alternative implementations might include using multi-criteria decision analysis techniques to weigh different performance aspects, or implementing a continuous evaluation process that adapts to changing grid conditions and requirements. Performance of the assistant is the key metric to assess conformity.

If a tested assistive system shows sufficient performance, it can be installed in a real world control center to enhance the capabilities of the existing system, e.g. suggesting better countermeasures against contingencies and sending respective command signals to switches and generators in the electrical grid.

In a further preferred embodiment of the inventive method, the method further comprises automatically generating, by the simulation module, the virtual scenarios based on predefined parameters and historical data. This approach offers the advantage of creating highly realistic and relevant scenarios, improving the accuracy and reliability of the testing process. It can also save time by automating the scenario creation process. Alternative implementations could involve using genetic algorithms to evolve and refine scenarios over time, or incorporating predictive models to generate future-oriented scenarios based on projected grid developments.#

In a further preferred embodiment of the inventive method, automatically analyzing interactions comprises identifying potential conflicts or interferences between the power grid control assistants and/or providing recommendations for resolving them. This embodiment offers the benefit of proactive problem identification and resolution, potentially preventing operational issues before they occur. It can enhance the overall reliability and efficiency of the power grid control system. Alternative implementations might include using expert systems to provide context-aware recommendations, or implementing a collaborative filtering approach to leverage insights from similar conflict resolution scenarios.

In a further preferred embodiment of the inventive method, the process may involve a simultaneous activation (sometimes called "switching" in the sense of switching on) of all components of the power grid control assistant. This simultaneous activation can be crucial in avoiding disruptions during the implementation of new or updated power grid control assistants. In some cases, a stepwise or incremental activation of components can lead to incompatibilities or operational disruptions. Therefore, ensuring that all affected instances are activated to the new function at the same time can be important. This may require careful planning, coordination, and execution to ensure a smooth transition and uninterrupted operation of the power grid control system.

In a further preferred embodiment of the inventive method, the simultaneous activation of components may be facilitated by a dedicated switching module within the system. This module may be configured to coordinate the switching process, ensuring that all components of the power grid control assistant are switched at the same time. The switching module may also monitor the switching process, identifying and addressing any issues that may arise during the transition.

In a further preferred embodiment of the inventive method, a business model may be offered for third-party companies to have their power grid control assistants tested by the control system provider. This business model can provide a valuable service for third-party companies, allowing them to leverage the expertise and resources of the control system provider to ensure the compatibility and performance of their power grid control assistants. The business model may involve a fee-for-service arrangement, where the third-party companies pay a fee to the control system provider in exchange for the testing and certification services.

In some cases, the business model may also include a certification process, where the control system provider issues a certification to the third-party companies upon successful completion of the testing process. This certification can serve as a proof of the power grid control assistant's conformity to specified standards or requirements, and can enhance the credibility and marketability of the third-party companies' products.

In a further preferred embodiment of the inventive method, assessing performance comprises quantifying and documenting at least one of the following aspects: efficiency improvements, cost reductions, error prevention capabilities of the power grid control assistants. These quantified evaluations are for example the basis for rating conformity.

In a further preferred embodiment of the inventive method, assessing performance comprises generating a standardized conformity rating for the tested power grid control assistants using a traffic light scheme, wherein green indicates full conformity, yellow indicates partial conformity, and red indicates non-conformity. This scheme can provide a clear and intuitive representation of the power grid control assistant's conformity to specified standards or requirements. For example, a green rating may indicate full conformity, a yellow rating may indicate partial conformity, and a red rating may indicate non-conformity. This traffic light scheme can make it easy for third-party companies to understand the results of the testing process, and can help them make informed decisions about the deployment and use of their power grid control assistants.

In a further preferred embodiment of the inventive method, the results obtained from the virtual integration testing process may be utilized to facilitate the installation and deployment of the new or updated power grid control assistants in real-world control centers. This embodiment may involve a carefully orchestrated transition from the virtual testing environment to the live operational setting, leveraging the insights gained from the simulation, analysis, and evaluation phases. This may include optimized settings for interfaces, data conversion measures and parameterization for data communication.

In some aspects, the deployment process may begin with a phased implementation approach, where the new assistive software is gradually integrated into the real-world control center operations. This approach may allow for real-time monitoring and fine-tuning of the system's performance under actual operating conditions. The assistive software may significantly enhance the operations of the real-world control center by providing advanced decision support, predictive analytics, and automated control capabilities.

For instance, the power grid control assistants may be configured to send optimized control signals to switches, transformers, and other grid components, enabling more efficient power flow management and rapid response to changing grid conditions. In some cases, these assistants may utilize machine learning algorithms to continuously improve their decision-making processes based on real-world operational data.

The implementation of these advanced power grid control assistants may offer numerous advantages to the control center operations. For example, the system may experience reduced downtime due to improved predictive maintenance capabilities and faster fault detection and isolation. The overall reliability of the power grid may be enhanced through more accurate load forecasting, improved voltage regulation, and optimized renewable energy integration.

In some implementations, the assistive software may enable more efficient handling of complex grid scenarios, such as managing distributed energy resources or responding to extreme weather events. This may result in improved grid resilience and reduced frequency and duration of power outages. Additionally, the enhanced decision support capabilities may lead to more cost-effective grid operations, potentially resulting in lower operational costs and improved resource allocation.

Furthermore, the integration of these advanced assistants may facilitate better compliance with regulatory requirements through automated reporting and more accurate tracking of grid performance metrics. In some cases, the system may also enable improved cybersecurity measures, enhancing the overall security posture of the power grid control center.

Based on known systems for testing new software components, the present invention addresses the challenge of providing a system that enables testing assistive systems for power grid control centers. The invention solves this task through a system according to claim 6. Preferred embodiments result from the dependent claims 7 to 10, whereby the same advantages as initially explained for the inventive computer-implemented method apply analogously.

Based on known non-transitory computer-readable mediums for testing new software components, the present invention addresses the challenge of providing a non-transitory computer-readable medium that enables testing assistive systems for power grid control centers. The invention solves this task through a system according to claim 11. Preferred embodiments result from the dependent claims 12 to 15, whereby the same advantages as initially explained for the inventive computer-implemented method apply analogously.

A number of implementations have been described. Nevertheless, it will be understood that various modifications may be made without departing from the spirit and scope of the disclosure. Accordingly, other implementations are within the scope of the following claims.

### BRIEF DESCRIPTION OF FIGURE

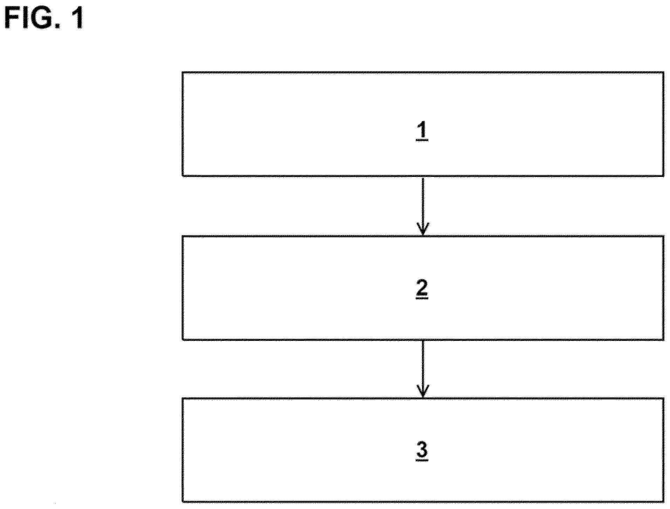

Non-limiting and non-exhaustive examples are described with reference to the following figures. FIG. 1 illustrates a flowchart for enhancing the performance of power grid control assistants, according to aspects of the present disclosure.

### DETAILED DESCRIPTION OF FIGURE

The following description sets forth exemplary aspects of the present disclosure. It should be recognized, however, that such description is not intended as a limitation on the scope of the present disclosure. Rather, the description also encompasses combinations and modifications to those exemplary aspects described herein.

The present disclosure provides a system, method, and non-transitory computer-readable medium for virtual integration testing of power grid control assistants. These elements collectively form a comprehensive solution for evaluating the performance, compatibility, and interactions of power grid control assistants in a simulated environment, prior to their deployment in live power grid control centers.

The system includes a simulation module 1, an analysis module 2 , and an evaluation module. The simulation module 1 is configured to generate scenarios for testing power grid control assistants, providing a realistic and flexible testing environment that can mimic a wide range of power grid conditions and events. In some cases, the scenarios are automatically generated based on predefined parameters and historical data. The predefined parameters may include pre-set variables, conditions, or constraints used to define and configure the virtual scenarios. The historical data may refer to previously recorded information about power grid operations, events, and performance, which can be used to inform and enhance the creation of realistic scenarios. The use of predefined parameters and historical data allows for the creation of highly realistic and representative scenarios, which can accurately reflect the complexities and challenges of real-world power grid operations. In other cased, the scenarios may be based on real situations recorded during operation of a power grid in its control center.

The analysis module 2 is designed to automatically analyze interactions between new or updated power grid control assistants and existing power grid control software. This module can identify potential conflicts or interferences between the assistants, and provide recommendations for resolving them, ensuring seamless integration and operation of the assistants within the power grid control environment. Following the generation of virtual scenarios, the method comprises automatically analyzing interactions between new or updated power grid control assistants and existing power grid control assistants and/or existing grid control software. This analysis is performed by an analysis module 2, which may be a software or hardware component designed to examine and interpret data, interactions, and outcomes from the virtual integration testing. This ensures seamless integration and operation of the assistants within the power grid control environment, and minimizes the risk of operational disruptions or inefficiencies.

The abovementioned step can involve the use of advanced algorithms, such as machine learning techniques, to detect patterns, anomalies, and potential conflicts in the interactions between different power grid control assistants.

The evaluation module 3 is responsible for assessing the performance of each power grid control assistant. This module quantifies and documents various aspects of the assistants' performance, such as efficiency improvements, cost reductions, and error prevention capabilities. In some cases, the evaluation module 3 may also generate a standardized conformity rating for the tested power grid control assistants using a traffic light scheme, providing a clear and intuitive representation of the assistants' conformity to specified standards or requirements.

This assessment is conducted by the evaluation module, which may be a software or hardware component responsible for evaluating the performance, efficiency, and effectiveness of power grid control assistants based on predefined criteria and metrics. The assessment of performance can provide valuable insights into the capabilities and benefits of the power grid control assistants, and can help identify areas for improvement or optimization. In some cases, the assessment of performance includes quantifying and documenting efficiency improvements, cost reductions, and error prevention capabilities of the power grid control assistants. This can provide a clear and objective measure of the benefits and advantages of the power grid control assistants, and can support decision-making processes related to their deployment and use in power grid control centers.

## Claims

1. A method for virtual integration testing of power grid control assistants, **characterized in that** the method comprises:
generating, by a simulation module, virtual scenarios for testing power grid control assistants (1);
automatically analyzing, by an analysis module, interactions between new or updated power grid control assistants and existing power grid control software (2); and
assessing, by an evaluation module, performance of each power grid control assistant (3).

2. The method of claim 1, further comprising automatically generating, by the simulation module, the virtual scenarios based on predefined parameters and historical data (1).

3. The method of claim 1 or 2, wherein automatically analyzing interactions comprises identifying potential conflicts or interferences between the power grid control assistants and/or providing recommendations for resolving them (2).

4. The method of one of the preceding claims, wherein assessing performance comprises quantifying and documenting at least one of the following aspects: efficiency improvements, cost reductions, error prevention capabilities of the power grid control assistants (3).

5. The method of claim 4, further comprising generating a standardized conformity rating for the tested power grid control assistants using a traffic light scheme, wherein green indicates full conformity, yellow indicates partial conformity, and red indicates non-conformity (3).

6. A system for virtual integration testing of power grid control assistants, **characterized in that** the system comprises:
a simulation module configured to generate virtual scenarios for testing power grid control assistants (1);
an analysis module configured to automatically analyze interactions between new or updated power grid control assistants and existing power grid control software (3); and
an evaluation module configured to assess performance of each power grid control assistant (3).

7. The system of claim 6, wherein the simulation module is further configured to automatically generate the virtual scenarios based on predefined parameters and historical data (1).

8. The system of claim 6 or 7, wherein the analysis module is further configured to identify potential conflicts or interferences between the power grid control assistants and/or provide recommendations for resolving them (2).

9. The system of one of the claims 6 to 8, wherein the evaluation module is further configured to assess performance by quantifying and documenting at least one of the following aspects: efficiency improvements, cost reductions, error prevention capabilities of the power grid control assistants (3).

10. The system of claim 9, wherein the evaluation module is further configured to generate a standardized conformity rating for the tested power grid control assistants using a traffic light scheme, wherein green indicates full conformity, yellow indicates partial conformity, and red indicates non-conformity (3).

11. A non-transitory computer-readable medium storing instructions that, when executed by a processor, cause the processor to perform a method for virtual integration testing of power grid control assistants as claimed in one of the claims 1 to 5, **characterized in that** the method comprises:
generating virtual scenarios for testing power grid control assistants (1);
automatically analyzing interactions between new or updated power grid control assistants and existing power grid control software (2); and
assessing performance of each power grid control assistant (3).

12. The non-transitory computer-readable medium of claim 11, wherein generating virtual scenarios comprises automatically generating the virtual scenarios based on predefined parameters and historical data (1).

13. The non-transitory computer-readable medium of one of the claims 11 or 12, wherein automatically analyzing interactions comprises identifying potential conflicts or interferences between the power grid control assistants and/or providing recommendations for resolving them (3).

14. The non-transitory computer-readable medium of one of the claims 11 to 13, wherein assessing performance comprises quantifying and documenting at least one of the following aspects: efficiency improvements, cost reductions, error prevention capabilities of the power grid control assistants (3).

15. The non-transitory computer-readable medium of claim 14, wherein assessing performance further comprises generating a standardized conformity rating for the tested power grid control assistants using a traffic light scheme, wherein green indicates full conformity, yellow indicates partial conformity, and red indicates non-conformity (3).
